# EUROPÄISCHE PATENTANMELDUNG

(11) **EP 0 546 488 A2**
(43) Veröffentlichungstag der Anmeldung: **16.06.1993**
(21) Anmeldenummer: 92120839.3
(22) Anmeldetag: 07.12.1992
(51) Int. Cl.: B60T 8/00, B60T 8/26

(54) **Ventileinrichtung zur Verschleissoptimierung zwischen Bremsen von Nutzfahrzeugen**

(30) Priorität: 12.12.1991 DE 4141030
(71) Anmelder: KNORR-BREMSE SYSTEME FÜR NUTZFAHRZEUGE GmbH, 80809 München (DE)
(72) Erfinder: Vollmer, Otto, W-8000 München 21 (DE)

(57) **Zusammenfassung**

Für die Verschleißoptimierung zwischen Bremsen von Nutzfahrzeugen ist eine Ventileinrichtung vorgesehen, mittels welcher verschleißabhängig das Druckverhältnis zwischen den zu betätigenden Bremsen veränderbar ist. Die Ventileinrichtung beinhaltet ein elektrisch angesteuertes Druckrückhalteventil (1) mit wenigstens einem Eingang und wenigstens einem Ausgang, wobei der ausgesteuerte Druck des Druckrückhalteventils unter Beeinflussung eines Proportionalmagneten (3) gleich oder kleiner ist als der eingesteuerte Druck. Die Druckdifferenz zwischen ein- und ausgesteuertem Druck ist über die am Proportionalmagneten (3) angelegte Stromstärke stufenlos von 0 bis zu einer maximalen Druckdifferenz Ap steuerbar. Das elektropneumatische Druckrückhalteventil (1) ist für verschiedene Einsatzfälle verwendbar, insbesondere zur Verschleißoptimierung an den Bremsgeräten zwischen Vorder- und Hinterachse bei Nutzfahrzeugen, wobei die elektrische Ansteuerung (Stromstärke) vorzugsweise in Abhängigkeit des Verschleisses erfolgt, der über Verschleißsensoren ermittelbar ist und in einer Steuereinheit für den Proportionalmagneten ausgewertet wird.

## Beschreibung

Die Erfindung betrifft eine Ventileinrichtung nach dem Gattungsbegriff des Patentanspruches 1.

Bei der Bremsbetätigung an Nutzfahrzeugen kann zwischen Vorder- und Hinterachse unterschiedlicher Verschleiß an den Bremsbelägen auftreten; dies gilt auch für die Bremsen einer Achse als auch für den Belagverschleiß an Zugfahrzeug und Anhängerfahrzeug. Bekannt sind z.B. in Anhänger-Bremsanlagen verwendete Rückhalteventile mit Schnellentlüftung; derartige Rückhalteventile werden bei Anhängerbremsanlagen mit Dauerbremse verwendet, wenn die Vorderachse mit größeren Bremszylindern ausgerüstet ist als die Hinterachse. Das Rückhalteventil hält den Druck an der Vorderachse um einen bestimmten Wert im unteren Bereich zurück, wobei bei steigendem Druck ein Ausgleich zwischen ein- und ausgesteuertem Bremsdruck stattfinden kann. Das tatsächliche Verschleißmaß, z.B. an Vorderachse und Hinterachse, bleibt bei derartigen Rückhalteventilen unberücksichtigt; es kann folglich zu ungleichem Verschleiß der Bremsbeläge von Vorder- und Hinterachse kommen, wenn die Einstellung des Rückhalteventils den tatsächlichen und sich verändernden Fahrgegebenheiten nicht angepaßt ist.

Es sind auch andere Ventileinrichtungen vergleichbarer Funktion bekannt, bei welchen der ausgesteuerte Druck und der eingesteuerte Druck in einem bestimmten Verhältnis zueinander abgewogen werden, um z.B. eine Voreilung des ausgesteuerten Druckes im Falle der Verwendung bei Anhängerbremsanlagen zu erreichen. Auch hierbei gilt, daß das tatsächliche Verschleißmaß unberücksichtigt bleibt. Die Probleme ungleichmäßigen Verschleisses können auch zwischen den Bremsgeräten einer Achse als auch zwischen den Bremsgeräten von Zugfahrzeug und Anhängerfahrzeug zutage treten.

Davon ausgehend besteht die Aufgabe der Erfindung darin, eine Ventileinrichtung der in Rede stehenden Art so auszugestalten, daß eine verschleißabhängige Optimierung zwischen Bremsgeräten, insbesondere zwischen Vorder- und Hinterachse eines Fahrzeuges, aber auch zwischen den Bremsanlagen von Zugfahrzeug und Anhängerfahrzeug, ermöglicht ist. Es soll mit Hilfe einfacher baulicher Elemente möglich sein, das abgefühlte Verschleißmaß unmittelbar in die gesteuerte Ventilbetätigung einfließen zu lassen, um hierdurch zu einer Verschleißoptimierung, d.h. Vergleichmäßigung an allen Bremsbelägen zu kommen.

Zur Lösung dieser Aufgabe dienen die Merkmale nach dem Kennzeichnungsteil des Patentanspruches 1.

Die Mittel zur Verschleißoptimierung mit Hilfe des Druckreduzier- bzw. Druckrückhalteventils sind von einfacher Art; mit Hilfe von an den Bremsbelägen verwendeten Verschleißsensoren und einer von diesen gespeisten Auswerteeinheit ist es in schaltungstechnisch einfacher Weise möglich, den Proportionalmagneten der Ventileinrichtung zu bestromen, derart, daß die Druckrückhaltung verschleißabhängig veränderbar ist. Eine derartige Druckrückhaltung kann so bestimmt werden, daß sie nur im unteren Druckbereich wirksam ist, d.h. im Bereich, wo die meisten Bremsungen stattfinden. Bei stärkeren Bremsungen kann am Ventil der volle Druck ausgesteuert werden. Im weiteren ist es in vorteilhafter Weise möglich, das mit Druckrückhaltung versehene Ventil erst dann elektrisch anzusteuern, wenn bereits ein geringer Druck, z.B. entsprechend dem Anlegedruck der mechanischen Bremse, ausgesteuert ist. Hierbei kann ein einfacher Druckschalter verwendet werden, welcher unabhängig von z.B. verwendeter ABS-Elektronik bei Erreichen eines bestimmten Druckes wirksam wird. Der Druckschalter kann dem Ventil nachgeschaltet oder am Ventil selbst oder am überwachten Bremszylinder angedordnet sein.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.

Fig.1 ist eine Teilschnittansicht eines Druckrückhalteventils gemäß einer ersten Ausführungsform der Erfindung;
Fig.2 gibt den Kennlinienverlauf für das Ventil nach Fig.1 wieder;
Fig. 3-11 sind der Fig.1 und 2 vergleichebare Ansichten von Ventilen und zugehörigen Kennlinien gemäß weiteren Ausführungsformen der Erfindung;
Fig.12 ist eine Teilschnittansicht eines mit einem erfindungsgemäßen Druckrückhalteventil versehenen Anhängersteuerventils; und
Fig.13 gibt Kennlinien für das in Fig.12 dargestellte Ventil wieder.

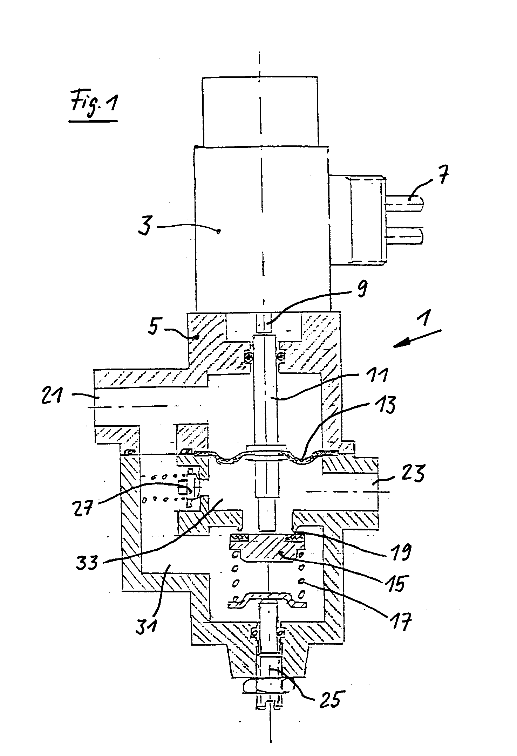

Die in Fig.1 dargestellte erfindungsgemäße Ventileinrichtung zur Verschleißoptimierung, z.B. zwischen Vorder- und Hinterachse bei Nutzfahrzeugen ist als pneumatisches Druckrückhalteventil 1 ausgebildet. Das Druckrückhalteventil weist einen Proportionalmagneten 3 auf, dessen Gehäuse baulich mit dem Gehäuse 5 des Druckrückhalteventils vereint ist und mittels eines elektrischen Anschlusses 7 mit einer Steuereinheit des Fahrzeugs in Verbindung steht. Die elektrische Ansteuerung (Stromstärke) des Proporationalmagneten 3 erfolgt vorzugsweise in Abhängigkeit des Verschleisses, welcher über Verschleißsensoren an den Bremsbelägen ermittelt und in der Steuereinheit ausgewertet wird. Der Proportionalmagnet wirkt über einen Stößel 9 auf einen Ventilstößel 11 ein, an welchem eine Membrane 13 befestigt ist. Das untere Ende des Ventilstößels 11 wirkt gegenüber einem Ventilteller 15, welcher durch eine Feder 17 in Richtung eines Ventilsitzes 19 verspannt ist.

Am Gehäuse 5 des Druckrückhalteventils sind ein Anschluß 21 für Druckluftzufluß und ein Anschluß 23 für Druckluftabfluß vorgesehen. Die Verbindung zwischen den beiden Anschlüssen wird in nachfolgend beschriebener Weise unter Steuerung durch den Proportionalmagneten 3 zum Zwecke der Verschleißoptimierung überwacht. Im weiteren ist im Druckrückhalteventil ein Rückschlagventil 27 vorgesehen, welches beim Entlüften des Anschlusses 21 für einen unverzögerten Druckabbau am Anschluß 23 sorgt.

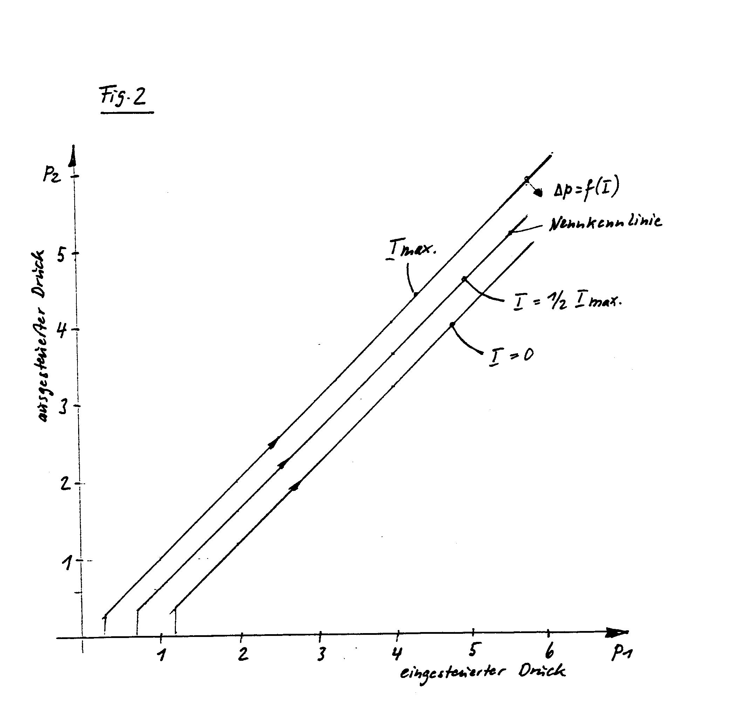

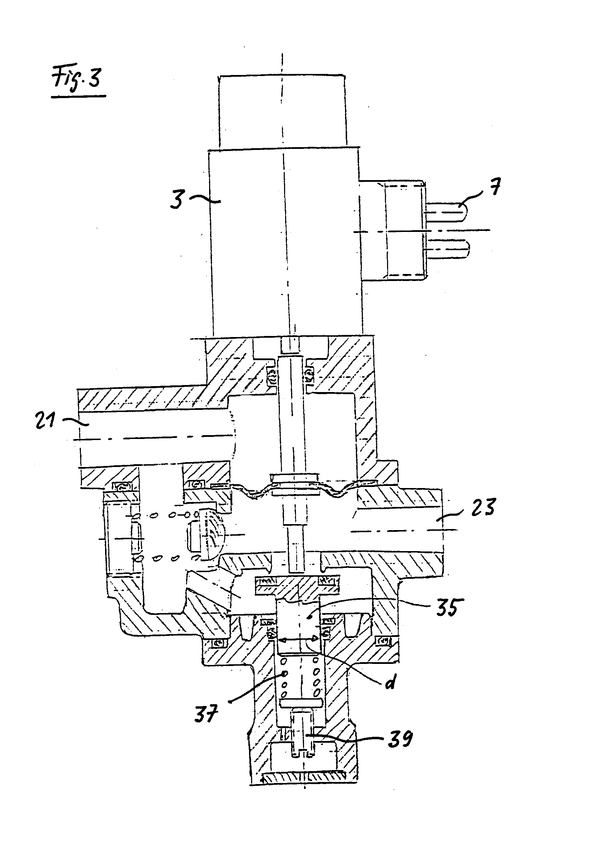

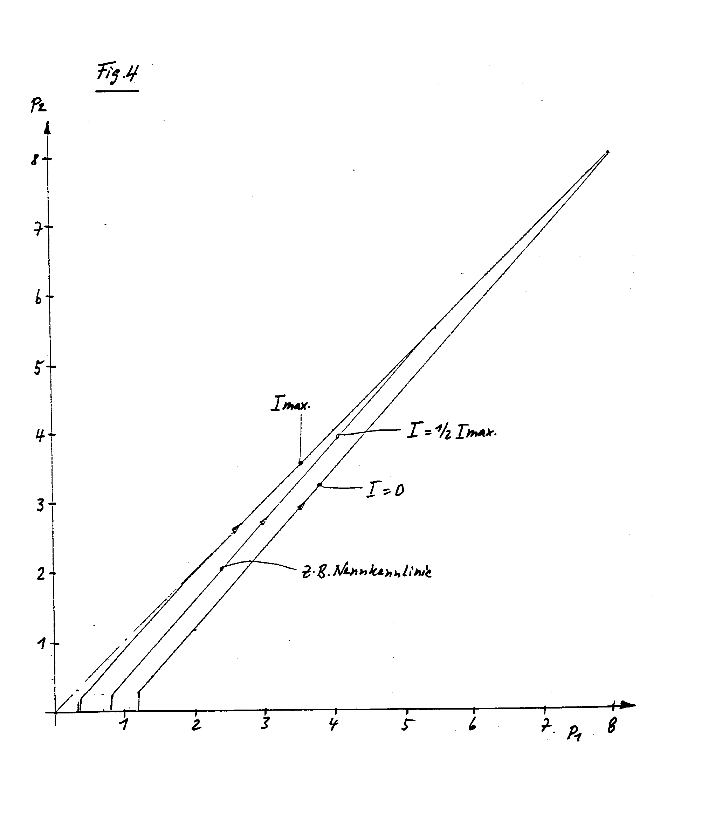

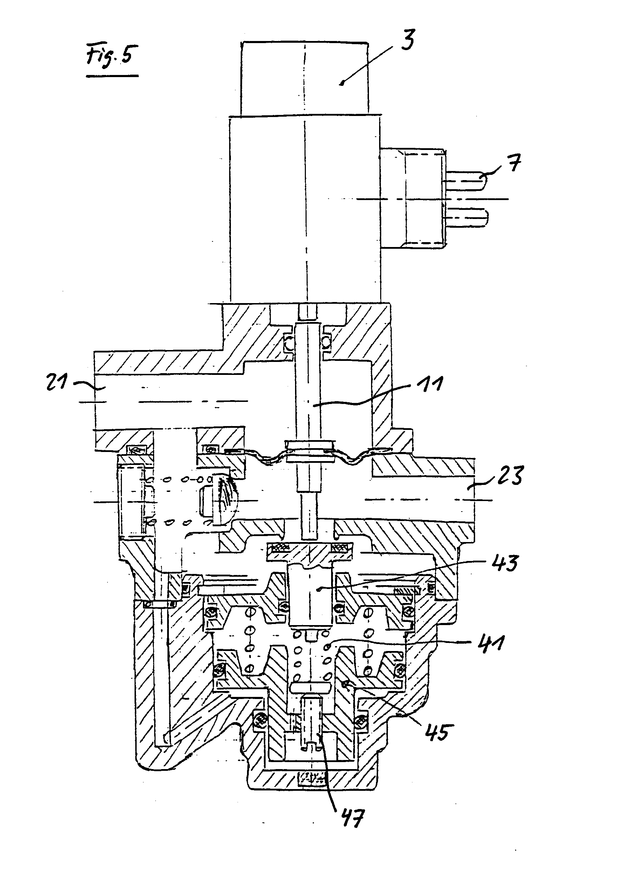

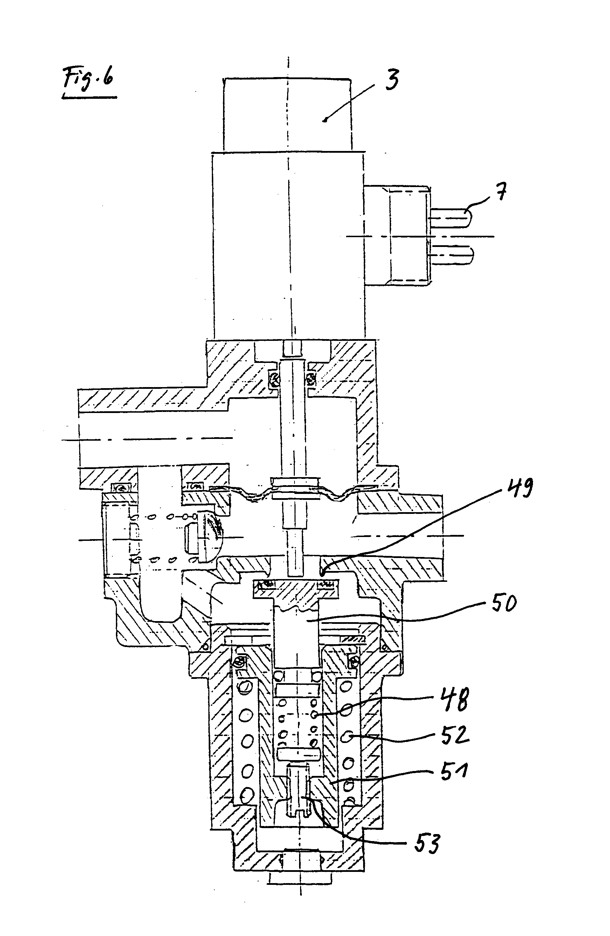

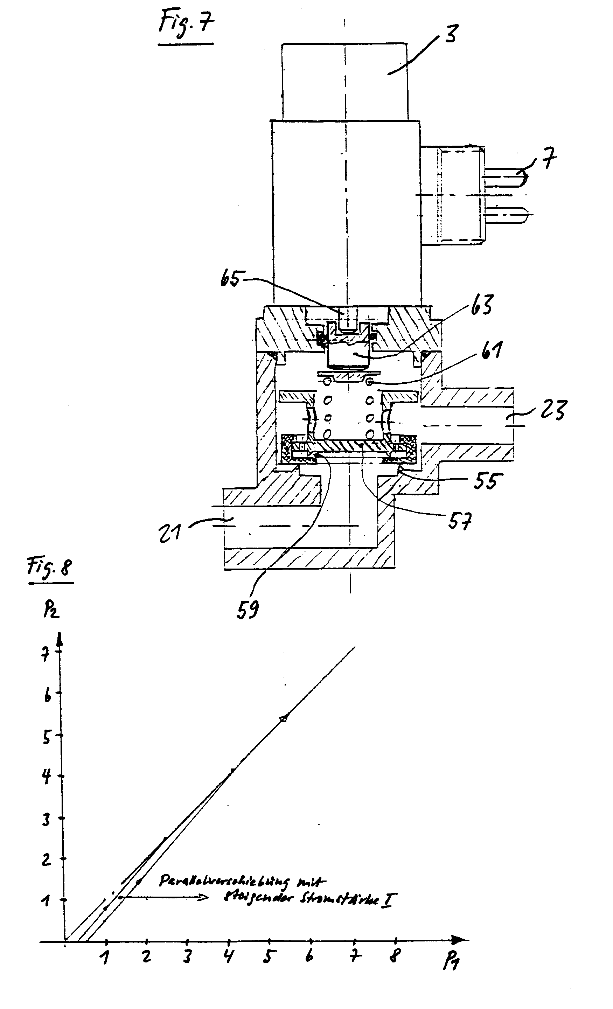

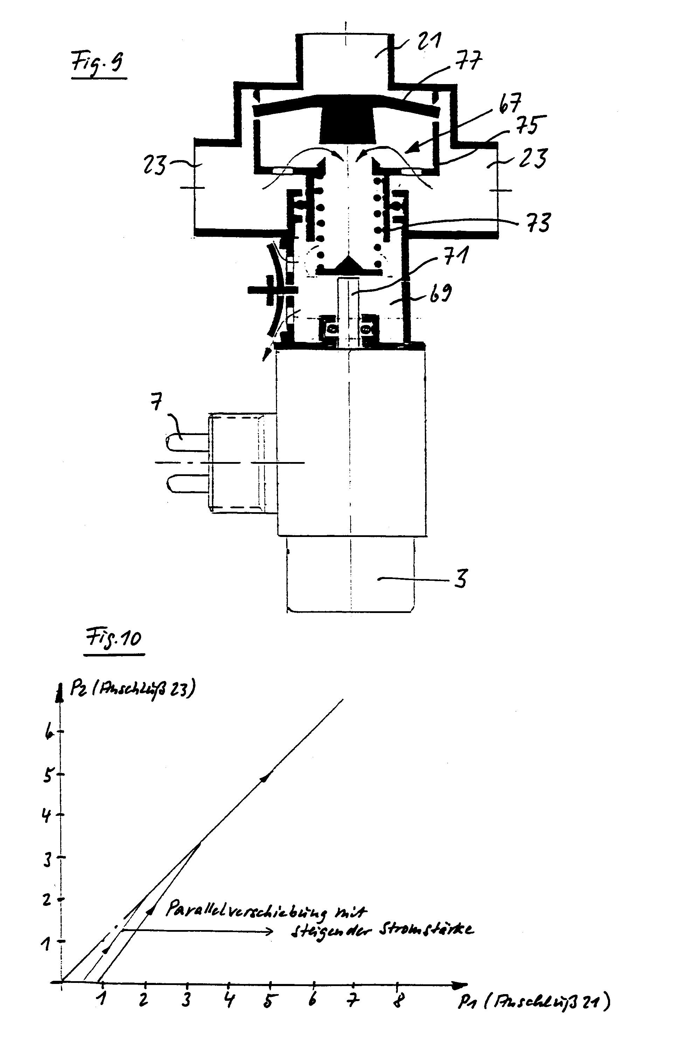

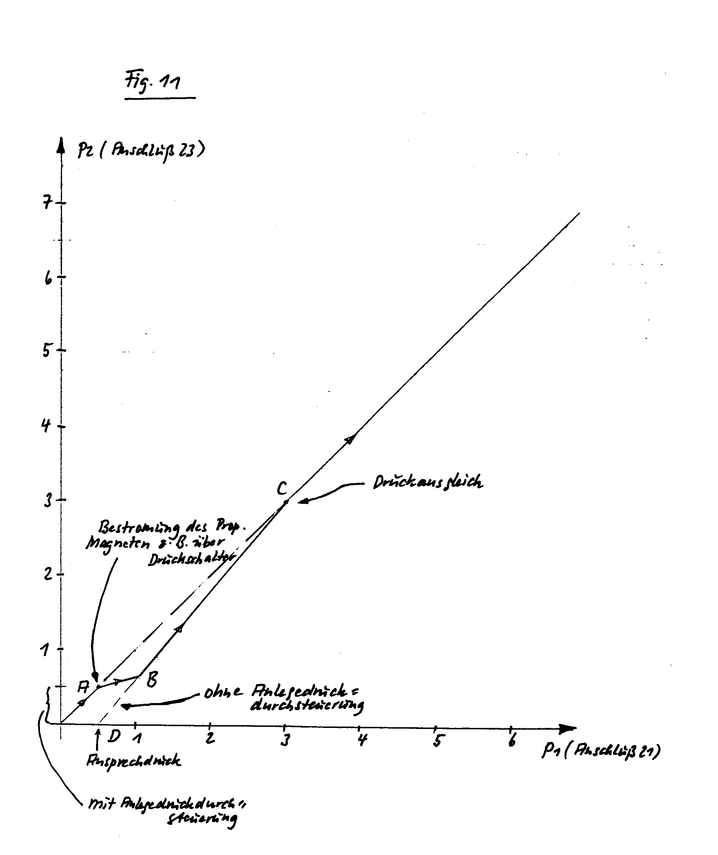

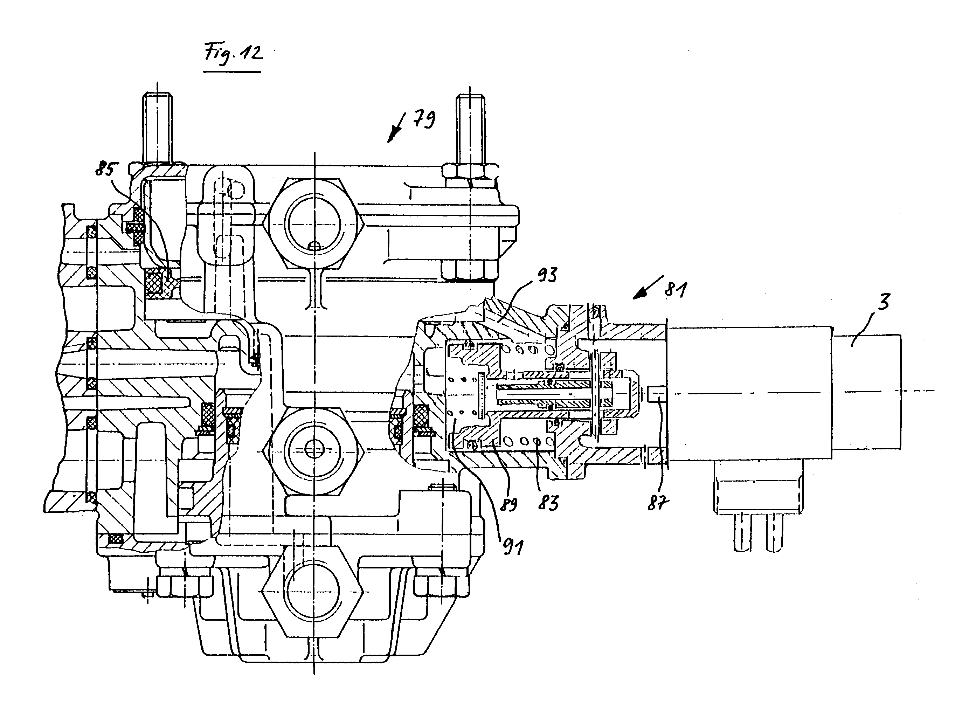

Die Funktion wird nachstehend unter Bezugnahme auf den Kennlinienverlauf nach Fig.2 erläutert:
Wenn sich das Druckrückhalteventil in Lösestellung befindet, dann ist der Anschluß 21 drucklos, der Ventilsitz 19 ist geschlossen und der Anschluß 23 ist ebenfalls praktisch drucklos, da das Rückschlagventil 21 im nicht druckbeaufschlagten Zustand mit der minimalen Kraft einer Feder 29 zugehalten wird.

Beim Belüften über Anschluß 21 wird die den Ventilstößel 11 tragende Membrane 13 gemäß Darstellung nach Fig.1 von oben druckbeaufschlagt. Ferner wirkt in gleicher Richtung die vom Proportionalmagneten 3 erzeugte Kraft (bei Stromstärke I größer 0). Nach Erreichen des Ansprechdruckes, d.h., wenn die am Ventilteller 15 wirkenden Kräfte (Kraft der Feder 17 und die nach oben wirkende Druckkraft) überwunden worden sind und der Ventilsitz 19 öffnet, strömt Druckluft vom Raum 31 in den Raum 33, weiter zum Anschluß 23 und von dort z.B. zu den Bremszylindern der Hinterachse, bis der von unten auf die Membrane 13 wirkende Reaktionsdruck so groß ist, daß der Ventilteller 15 gegenüber dem Ventilsitz 19 wieder schließt. Bei dieser sogenannten Bremsabschlußstellung herrscht am Ventilteller 15 Kräftegleichgewicht.

Die bei weiterer Druckerhöhung sich einstellende Abhängigkeit zwischen ein- und ausgesteuertem Druck ist der Kennlinie in Fig.2 zu entnehmen. Die gewünschte Druckrückhaltung Ap = p1 - p2 wird hauptsächlich bestimmt durch die wirksamen Flächen an der Membrane 13 und am Ventilteller 15 (Dimensionsgrößen), durch die eingestellte Kraft der Feder 17 und durch die variable Magnetkraft, die in der Regel proportional zur Stromstärke 1 ist. Fig.2 veranschaulicht, daß die Druckrückhaltung bei maximalem Strom vollkommen aufgehoben ist, d.h. daß eingesteuerter und ausgesteuerter Druck gleich sind, während bei einem Strom I = 0 eine Druckrückhaltung Ap von maximaler Größe besteht. Zum Zwecke der Verschleißoptimierung wird vorteilhafterweise von der Nennkennlinie bei einem Strom I = 1/2 Imax ausgegangen, so daß eine Erhöhung oder Reduzierung des ausgesteuerten Druckes, d.h. eine erwünschte Veränderung der Druckrückhaltung durch Erhöhung oder Reduzierung der Stromstärke I ermöglicht ist.

Bei Verwendung des Druckrückhalteventils zur Verschleißoptimierung zwischen Vorderachse (VA) und Hinterachse (HA) kann das Gerät an der Vorder- oder Hinterachse eingebaut werden. Vorzugsweise ist das Ventil an der Hinterachse (HA) nach dem Bremskraftregler und vor dem ABS-Drucksteuerventil (falls vorhanden) einzubauen; das Druckrückhalteventil kann auch an der Vorderachse zwischen Fußbremsventil und ABS-Drucksteuerventil eingebaut werden. Wird durch die Veschleißsensoren z.B. ein zu hoher Verschleiß am Bremsbelag der überwachten Bremsen ermittelt, so wird dieser Wert in der Steuereinheit ausgewertet und in eine Erhöhung oder Reduzierung der Stromstärke am Proportionalmagneten umgesetzt. Bei zu starkem Verschleiß wird - ausgehend von der Nennkennlinie nach Fig.2 - die Stromstärke reduziert, um eine Reduzierung des ausgesteuerten Druckes am Anschluß 23 zu erreichen, die Druckrückhaltung wird folglich erhöht. Wird dagegen bei einem Vergleich zwischen Vorderachse und Hinterachse ein zu geringer Verschleiß an der Hinterachse festgestellt, dann erfolgt eine Erhöhung des Stromes, um ausgehend von der Nennkennlinie nach Fig.2 den Verlauf entsprechend I max bzw. einen dazwischen liegenden Verlauf zu erhalten. Beim Einbau in ein neues Fahrzeug wird folglich vorzugsweise die Nennkennlinie nach Fig.2 gewählt, z.B. bei Ap = 0,4 bar. Wird nach einer bestimmten Laufzeit festgestellt, daß der Verschleiß an der Achse, an der das Ventil eingesetzt ist, z.B. an der Hinterachse, größer ist als an der Vorderachse, dann ist die Druckrückhaltung durch Reduzierung der Stromstarke zu erhöhen, z.B. auf Ap = 0,6 bar. Ist dagegen der Verschleiß an der Vorderachse größer als an der Hinterachse, dann ist die Druckrückhaltung durch Erhöhung der Stromstärke zu verringern, z.B. auf Ap = 0,2 bar.

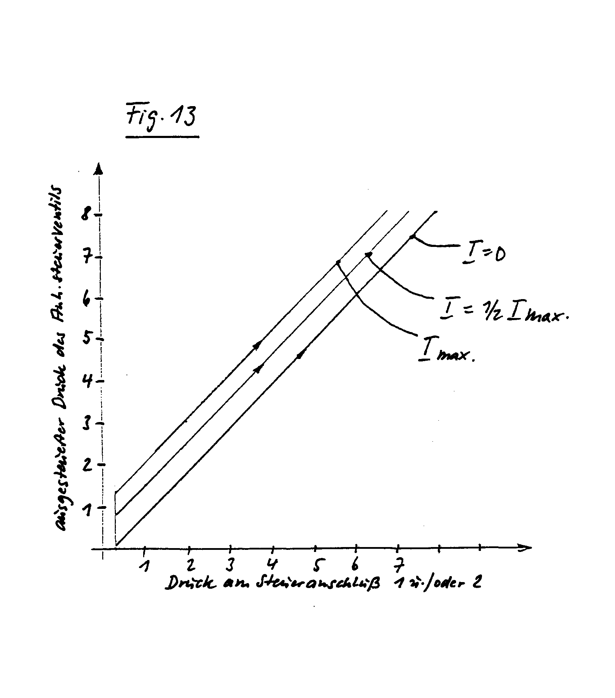

Fig.3 der Zeichnung zeigt ein Ausführungsbeispiel mit entlastetem Ventilteller 35. Durch entsprechende Wahl des Durchmessers d des Ventiltellerschaftes ist es möglich, daß sich die Druckrückhaltung mit zunehmendem Druck verringert, d.h. eine Kennliniensteigung größer 45 wird erreicht, wie die Kennlinie nach Fig.4 veranschaulicht. In diesem Fall wird durch den auf der Oberseite des Ventiltellers wirkenden, ausgesteuerten Druck die Kraft der Feder 37 in zunehmendem Maße überwunden und schließlich ausgeschaltet, so daß bei weiterer Druckerhöhung im wesentlichen eingesteuerter und ausgesteuerter Druck einander gleich sind. Entsprechendes ist durch Reduzierung der Kraft der Feder 37 erreichbar, wenn die in Fig.3 wiedergegebene Stellschraube 39 in einer die Federkraft reduzierenden Weise betätigt wird.

Bei dem in Fig.5 wiedergegebenen Druckrückhalteventil gemäß der Erfindung besitzt der die Feder 41 für den Ventilteller 43 tragende Hilfskolben 45 die Aufgabe, den Ansprechdruck erst zeitlich verzögert voll wirksam werden zu lassen, d.h. in der Ansprechphase bleibt die Feder 41 entsprechend Einstellung durch die die Feder abstützende Stellschraube 47 in entlastetem Zustand, während später bei nach oben sich bewegendem Hilfskolben 45 die volle Kraft der Feder 41 am Ventilteller 43 wirksam werden kann. Bei in Ausgangslage befindlichem Hilfskolben 45 und entsprechender Position der Stellschraube 47 kann zunächst von einer vollkommen entlasteten Feder ausgegangen werden.

Bei der in Fig.6 dargestellten Ausführungsform des elektropneumatischen Druckrückhalteventils wird der von der Feder 48 in Richtung des Ventilsitzes 49 verspannte Ventilteller 50 von einem Stellkolben 51 getragen, welcher durch den eingesteuerten Druck gegen die Kraft einer Feder 52 gemäß Darstellung in der Zeichnung nach unten gerichtet verlagerbar ist. Auf diese Weise ist bei zunehmendem Druck, d.h. im oberen Druckbereich die Druckrückhaltung zwischen eingesteuertem und ausgesteuertem Druck aufgehoben, d.h. Ap = 0. Am Stellkolben 51 ist vorzugsweise eine Stellschraube 53 vorgesehen, gegen welche sich die Feder 48 abstützt. Mit Hilfe der Stellschraube 53 ist in einer der Ausführungsform nach Fig.3 vergleichbaren Weise die Druckrückhaltung einstellbar.

In Fig.7 der Zeichnung ist ein gegenüber den vorstehend erläuterten Ausführungsbeispielen baulich vereinfachtes, elektropneumatisch wirkendes Druckrückhalteventil dargestellt. Das Druckrückhalteventil nach Fig.7 weist einen gegenüber einem Ventilsitz 55 wirkenden Ventilteller 57 auf, an welchem ein Rückschlagventil 59 integriert ist. Der Ventilteller 57 ist durch eine Feder 61 verspannt, die sich an einem Ventilstößel 63 abstützt. Auf den Ventilstößel 63 wirkt ein von einem Proportionalmagneten 3 betätigbarer Stößel 65. Durch das Rückschlagventil 59 entfällt das parallel angeordnete Rückschlagventil, wie es z.B. bei der Ausführungsform nach Fig.3 bzw. 5 zur Anwendung gelangt. Die Kennlinie des Druckrückhalteventils gemäß Fig.7 ist in Fig.8 dargestellt. Vorteilhaft ist, daß die Druckrückhaltung nur im unteren Druckbereich wirkt, d.h. im Bereich, wo die meisten Bremsungen stattfinden. Da der ausgesteuerter Druck auf den Querschnitt des Ventilstößels 63 wirkt, erfolgt bei Erhöhung des Druckes eine zunehmende Reduzierung der Kraft der Feder 61, d.h. es wird in zunehmendem Maße der volle Druck ausgesteuert, bis der eingesteuerte Druck dem ausgesteuerten Druck entspricht. Die Höhe der Druckrückhaltung ist von der Kraft des Proportionalmagneten abhängig, die dieser über die Feder 61 auf den Ventilteller 57 ausübt. Mit steigender Stromstärke I erfolgt eine Parallelverschiebung der eine Druckrückhaltung aufweisenden Kennlinie, wie Fig.8 veranschaulicht. Der Wert p1 - p2 = Ap steigt demnach bei steigender Stromstärke I des Proportionalmagneten. Die Feder 61 ist nicht unbedingt erforderlich, bringt aber den funktionellen Vorteil, daß der Öffnungshub des Ventiltellers 55 unabhängig vom Hub des Proportionalmagneten ist.

Die Steigung der Kennlinie im mit Druckrückhaltung wirkenden unteren Druckbereich ist abhängig vom Durchmesser des Ventilsitzes 55 und dem Durchmesser des Ventilstößels 63. Durch Änderung des Ventilstößel-Durchmessers ist es auf einfache Weise möglich, die Steigung zu verändern.

Fig.9 zeigt ein elektropneumatisches Druckrückhalteventil mit integrierter Schnellentlüftung; das Ventil in Fig.9 ist in Entlüftungsposition dargestellt, in welcher die zu den Bremszylindern führenden Anschlüsse 23 bei drucklosem Anschluß 21 durch das Schnellentlüftungsventil 67 in die mit Außenluft in Verbindung stehende Kammer 69 entlüften. Die gewünschte Druckrückhaltung wird wie im Falle der vorstehend beschriebenen Ausführungsformen gemäß der Erfindung durch den Proportionalmagneten 3 bewerkstelligt; dieser wirkt mittels eines Stößels 71 auf eine Feder 73 ein, welche den Kolben 75 in Richtung der Membrane 77 verspannt. Die gewünschte Druckrückhaltung wird wie beim Ventil nach Fig.7 durch den Proportionalmagneten 3 bewerkstelligt. Fig.10 zeigt den Kennlinienverlauf, welcher ebenfalls der Charakteristik nach Fig.8 angepaßt werden kann, d.h. mit steigender Stromstärke I des Proportionalmagneten erfolgt eine Erhöhung der Druckdifferenz.

Vorteilhaft ist es, die Druckrückhalteventile erst dann elektrisch anzusteuern, wenn bereits ein geringer Druck, z.B. entsprechend dem Anlegedruck der mechanischen Bremse, ausgesteuert worden ist. Dadurch wird eine "Anlegedruckdurchsteuerung" bewirkt, wie sie z.B. bei Bremskraftreglern bekannt ist. Als weiterer positiver Effekt ist festzustellen, daß die Reduzierung des Ansprechdruckes auf einen Minimalwert, praktisch 0, erfolgen kann, wie Fig.11 veranschaulicht. Am Punkt A gemäß Fig.11 erfolgt die Bestromung des Proportional-Magneten, wobei das Signal für die Aktivierung des Proportionalmagneten vorzugsweise über einen Druckschalter erfolgen kann. Dieser Druckschalter kann dem Druckrückhalteventil nachgeschaltet oder am Ventil selbst angeordnet sein. Der Schalter kann auch am Bremszylinder vorgesehen sein.

In Fig.11 veranschaulicht die gestrichelte Linie zwischen den Punkten B und D (Punkt des Ansprechdruckes) den Kennlinienverlauf ohne Anlegedruckdurchsteuerung; der Verlauf der Kennlinie zwischen B und C veranschaulicht die Druckrückhaltung, d.h., daß im Punkt C eingesteuerter und ausgesteuerter Druck gleich sind. Eine Parallelverschiebung der Kennlinie B-C gemäß Fig.11 nach rechts gerichtet erfolgt bei zunehmender Bestromung des Proportionalmagneten, d.h. mit zunehmender Stromstärke I, wie vorstehend erläutert ist.

In Rahmen des der Erfindung eigenen allgemeinen Gedankens ist es auch möglich, das Prizip des elektropneumatischen Druckrückhalteventils z.B. an einem Anhängersteuerventil zu verwirklichen, um die Druckvoreilung des am Anhängersteuerventil ausgesteuerten Bremsdruckes für den Anhänger nach Maßgabe der Stromstärke des Proportionalmagneten des Druckrückhalteventils zu verändern. Bei dem in Fig.12 in Teilschnittansicht wiedergegebenen Anhängersteuerventil von an sich bekannter Wirkungsweise ist ein Voreilventil 81 vorgesehen, mit welchem es möglich ist, daß je nach Federvorspannung der Feder 83 der ausgesteuerte Bremsdruck am zum Anhänger führenden Anschluß (nicht dargestellt) den Reaktionsdruck unter dem nur teilweise dargestellten Kolben 85 und somit auch den Steuerdruck am (nicht dargestellten) Anschluß um einen entsprechenden Betrag, nämlich die Voreilung, übersteigt. Das Voreilventil 81 ist gemäß der Erfindung im Sinne eines Druckrückhalteventils ausgebildet, d.h. es ist mit einem Proportionalmagneten versehen, dessen Stößel 87 in gleichem Sinne wie die Feder 83 auf den Kolben 89 einzuwirken vermag, wobei der ausgesteuerte Druck des Anhängersteuerventils in der gemäß Zeichnung links bezüglich des Kolbens 89 befindlichen Kammer 91 wirkt und der Kraft der Feder 83 als auch der elektromagnetischen Kraft des Proportionalmagneten entgegenwirkt, in dem Sinne, daß in den Kanal 93 ein reduzierter Druck ausgesteuert wird. Dies bestimmt die Druckrückhaltung des Voreilventils 81. Durch Druckrückhaltung unter Steuerung durch den Proportionalmagneten ist es möglich, das Bremsverhalten des Anhängers gegenüber dem des Zugfahrzeugs zu optimieren, wobei durch die Steuereinheit auch andere als dem Verschleißmaß entsprechende Steuergrößen zur Betätigung des Proportionalmagneten eingegeben werden können. In jedem Falle ist es mit Hilfe baulich einfacher Mittel ermöglicht, ein herkömmliches Steuerventil durch bauliche Integration mit dem Druckrückhalteventil gemäß der Erfindung mit einer Funktion zu versehen, welche nicht nur zur Verschleißoptimierung zwischen Vorder- und Hinterachse, sondern auch zur Bremsoptimierung zwischen Anhängerfahrzeug und Zugfahrzeug verwendbar ist.

Fig.13 gibt den Kennlinienverlauf des Anhängersteuerventils nach Fig.12 unter Verwendung des Druckrückhalteventils wieder, wobei unterschiedliche Kennlinienverläufe durch unterschiedliche Bestromung des Proportionalmagneten gebildet sind. Hierbei steht der in der Kammer 91 existierende, ausgesteuerte Druck des Anhängersteuerventils dem Druck am ersten Steueranschluß und/oder zweiten Steueranschluß des Anhängersteuerventils gegenüber. Die Druckvoreilung des ausgesteuerten Druckes ist bei maximaler Bestromung des Proportionalmagneten am größten; dieser Kennlinienverlauf kann erwünscht sein, wenn in der Anhängerbremsanlage eine relativ hohe Bremsbetätigung erforderlich ist und die entsprechenden Sensoren über die Steuereinheit zu einer entsprechenden Bestromung des Porportionalmagneten beitragen.

### Bezugszeichenliste

1 Druckrückhalteventil
3 Proportionalmagnet
5 Gehäuse
7 Anschluß
9 Stößel
11 Ventilstößel
13 Membrane
15 Ventilteller
17 Feder
19 Ventilsitz
21 Anschluß
23 Anschluß
25 Stellschraube
27 Rückschlagventil
29 Feder
31 Raum
33 Raum
35 Ventilteller
37 Feder
39 Stellschraube
41 Feder
43 Ventilteller
45 Hilfskolben
47 Stellschraube
48 Feder
49 Ventilsitz
50 Ventilteller
51 Stellkolben
52 Feder
53 Stellschraube
55 Ventilsitz
57 Ventilteller
59 Rückschlagventil
61 Feder
63 Ventilstößel
65 Stößel
67 Schnellentlüftungsventil
69 Kammer
71 Stößel
73 Feder
75 Kolben
77 Membrane
79 Anhängersteuerventil
81 Voreilventil
83 Feder
85 Kolben
87 Stößel
89 Kolben
91 Kammer
93 Kanal

## Patentansprüche

1. Ventileinrichtung zur Verschleißoptimierung zwischen Bremsen von Nutzfahrzeugen, insbesondere zwischen Vorder- und Hinterachse, dadurch gekennzeichnet, daß die Ventileinrichtung aus einem elektrisch angesteuerten Druckrückhalteventil (1) besteht, dessen elektrische Ansteuerung (Stromstärke) in Abhängigkeit des Verschleisses erfolgt, welcher über Verschleißsensoren an den Bremsbelägen ermittelbar und in einer Steuereinheit auswertbar ist.

2. Ventileinrichtung nach Anspruch 1, gekennzeichnet durch folgende Merkmale:
a) das Druckrückhalteventil weist wenigstens einen Einlaß (Anschluß 21) und wenigstens einen Auslaß (Anschluß 23) auf;
b) zwischen Einlaß und Auslaß befindet sich ein von einem federbelasteten Ventilteller (15) überwachter Ventilsitz (19);
c) in Öffnungsrichtung des Ventiltellers (15) wirkt auf diesen ein Ventilstößel (11) ein, welcher von einer vom Einlaßdruck beaufschlagbaren Membrane (13) getragen ist; und
d) in Betätigungsrichtung des Ventilstößels (11) wirkt auf diesen der Stößel (9) eines Proportionalmagneten (3), derart, daß die Stößelkraft des Ventilstößels (11) durch den Proportionalmagneten unterstützbar ist.

3. Ventileinrichtung nach Anspruch 1 oder 2, dadurch gekennzeichnet, daß der Proportionalmagnet (3) einen elektrischen Anschluß (7) für eine von Verschleißsensoren gespeiste Steuereinheit aufweist.

4. Ventileinrichtung nach einem der vorangehenden Ansprüche, dadurch gekennzeichnet, daß der Ventilteller von einer in ihrer Federspannung einstellbaren Feder (17) in Richtung des Ventilsitzes (19) verspannbar ist.

5. Ventileinrichtung nach einem der vorangehenden Ansprüche, dadurch gekennzeichnet, daß die vom Ventilsitz (19) abgewandte Fläche des Ventiltellers (15) druckenlastet im Gehäuse der Ventileinrichtung geführt ist.

6. Ventileinrichtung nach einem der vorangehenden Ansprüche, dadurch gekennzeichnet, daß die den Ventilteller (43) in Richtung des Ventilsitzes verspannende Feder (41) von einem vom eingesteuerten Druck gegen Federkraft beaufschlagbaren Stellkolben (49) getragen ist.

7. Ventileinrichtung nach einem der vorangehenden Ansprüche, gekennzeichnet durch ein zwischen dem Einlaß und dem Ventilsitz (19) befindliches, in Richtung des Einlasses öffnendes Rückschlagventil (27) zur Entlüftung des Auslasses und der angeschlossenen Bremsorgane bei Druckentlastung des Einlasses.

8. Ventileinrichtung nach Anspruch 1, gekennzeichnet durch folgende Merkmale:
a) das Druckrückhalteventil weist wenigstens einen Einlaß (Anschluß 21) und wenigstens einen Auslaß (Anschluß 23) auf;
b) zwischen Einlaß und Auslaß befindet sich ein von einem Ventilteller (57) überwachter Ventilsitz (55);
c) in Öffnungsrichtung des Ventiltellers wirkt auf diesen der Einlaßdruck ein;
d) an der dem ausgesteuerten Druck des Druckrückhalteventils ausgesetzten Fläche des Ventiltellers (57) liegt eine den Ventilteller (61) in Richtung des Ventilsitzes verspannende Feder an;
e) das entgegengesetzte Ende der Feder (61) stützt sich an einem Ventilstößel (63) ab; und
f) der Ventilstößel (63) ist durch einen von einem Proportionalmagneten (3) verschiebbaren Stößel (65) beaufschlagbar, derart, daß die den Ventilteller in Richtung des Ventilsitzes drückende Kraft der Feder (61) durch die Kraft des Stößels (65) unterstützbar ist.

9. Ventileinrichtung nach Anspruch 8, dadurch gekennzeichnet, daß im Ventilteller (57) ein bei Druckentlastung des Einlasses in Richtung desselben öffnendes Rückschlagventil (59) integriert ist.

10. Ventileinrichtung nach Anspruch 8, dadurch gekennzeichnet, daß das Druckrückhalteventil eine an sich bekannte Schnellentlüftung aufweist.

11. Ventileinrichtung nach Anspruch 1, dadurch gekennzeichnet, daß das elektrisch angesteuerte Druckrückhalteventil als Voreilventil (81) eines Anhängersteuerventils ausgebildet ist.
